# EUROPEAN PATENT SPECIFICATION

(11) **EP 1 815 634 B1**
(45) Date of publication and mention of the grant of the patent: **07.01.2015**
(21) Application number: 05813045.1
(22) Date of filing: 21.11.2005
(51) Int. Cl.: H04L 12/58, H04L 29/06

(54) **DATA SECURITY IN A MOBILE E-MAIL SERVICE**
DATENSICHERHEIT IN EINEM MOBIL-EMAIL-DIENST
SECURITE DE DONNEES DANS UN SERVICE DE COURRIER ELECTRONIQUE MOBILE

(30) Priority: 22.11.2004 FI 20045451; 26.01.2005 FI 20055038; 09.02.2005 US 651082 P; 09.02.2005 US 650975 P
(43) Date of publication of application: 08.08.2007
(73) Proprietor: Seven Networks, Inc., San Carlos, CA 94070 (US)
(72) Inventor: BACKHOLM, Ari, FI-02140 Espoo (FI); SALORINNE, Seppo, FI-00950 Helsinki (FI); KETONEN, Marko, FI-00530 Helsinki (FI); VUORNOS, Lauri, San Francisco, CA 94109, USA (US); GROEBER, Marcus, 38518 Gifhorn (DE); AHONEN, Jukka, FI-02600 Espoo (FI); SAARILAHTI, Antti, FI-00910 Helsinki (FI); SALMI, Petri, FI-02110 Espoo (FI)
(74) Representative: Leach, James
(86) International application number: PCT/FI2005/050426
(87) International publication number: WO 2006/053954

(56) References cited:
- WO-A1-03/007570
- WO-A1-03/098890
- US-A1- 2002 049 818
- US-B1- 6 745 326

## Description

### BACKGROUND OF THE INVENTION

The invention relates to methods and equipment for establishing data security in an e-mail service between an e-mail server and a mobile terminal.

Data security in an e-mail service is achieved by using cryptographic techniques in which traffic in a potentially insecure channel is encrypted using cryptographic information, commonly called encryption keys. A problem underlying the invention relates to distributing such encryption information. Prior art techniques for distributing the encryption information are commonly based on public key encryption techniques, such as Diffie-Hellman. A problem with this approach is that the parties have to trust the underlying mobile network and its operator, which they are surprisingly reluctant to do. Another problem is that mobile terminals tend to have small and restricted user interfaces.

US2002/949818 discloses a system and method for pushing information from a host system to a mobile data communication device upon sensing a triggering event. A redirector program operating at the host system enables a user to continuously redirect certain user-selected data items from the host system to the user's mobile data communication device upon detecting that one or more user-defined triggering events has occurred. The redirector program operates in connection with event-generating applications and repackaging systems at the host system to configure and detect a particular user-defined event, and then to encrypt and repackage the user-selected data items in an electronic wrapper prior to pushing the data items to the mobile device.

### BRIEF DESCRIPTION OF THE INVENTION

An object of the present invention is to provide a method and an apparatus for implementing the method so as to alleviate the above problems. The object of the invention is achieved by the method and computer program as set out in the independent claims. Preferred embodiments of the invention are disclosed in the dependent claims.

The invention is partially based on the discovery of a surprising problem that has been found as a result of extensive market research. Although clients of mobile networks normally trust their mobile operators as regards voice calls, they are surprisingly reluctant to trust the mobile operators as regards data services, such as e-mail service. The reluctance to trust mobile operators in respect of data services makes public-key interchange schemes unattractive.

The encryption information and the identifier of the mobile terminal are combined into a service activation code, which also includes checksum information so as to detect an incorrectly entered service activation code.

In an embodiment, the secure channel for conveying the encryption information is implemented as follows. The user of the mobile terminal may have a host system, such as an office terminal, which is coupled to the connectivity function via a private network. The private network requires authentication in order to grant access to users. In this embodiment the mobile terminal generates the encryption information and displays it on its display, and the user enters the encryption information to the host system that is coupled to the private network.

Alternatively, the mobile terminal user may have a trust relation with another person, such as a support technician, who is authenticated in the private network. For example, trust relation may be established in a voice call in which the support technician recognizes the voice of the mobile terminal user. The mobile terminal user then dictates the encryption information to the support technician who enters it via a host system coupled to the private network.

Thus the secure channel from the mobile terminal to the connectivity function comprises a short segment over which the encryption information is conveyed off-line to a human user that may be the user of the mobile terminal or someone who trusts him/her. The off-line segment is a segment that is detached from public networks and is immune against hacking or eavesdropping via public networks. The off-line segment is implemented visually, such that the mobile terminal displays the encryption information on its display, and the user enters it into a terminal of the private network. In examples which are not embodiments of the present invention, the encryption information may be conveyed on a detachable memory or via a short-range microwave connection, an example of which is known as Bluetooth. The secure channel may also comprise a segment spanned by a conventional voice call, if the mobile terminal user is distant from a terminal of the private network.

### BRIEF DESCRIPTION OF THE DRAWINGS

In the following the invention will be described in greater detail by means of preferred embodiments with reference to the attached drawings, in which
Figure 1 shows an exemplary system architecture in which the invention can be used;
Figure 2 shows procedure steps for establishing a secure connection.

### DETAILED DESCRIPTION OF PREFERRED EMBODIMENTS

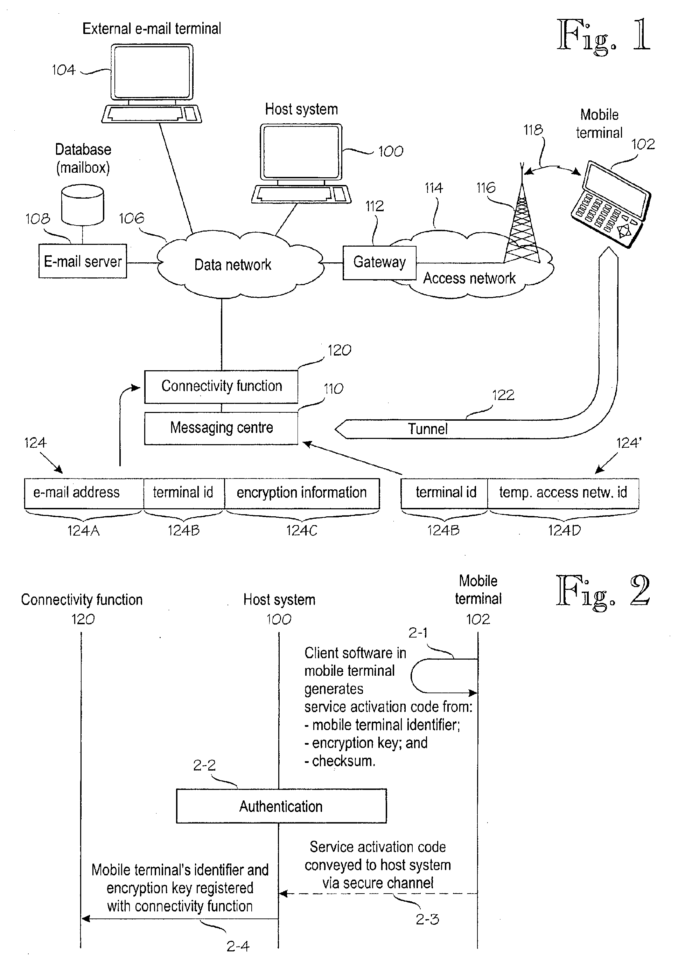

The invention is applicable to virtually any mobile e-mail system architecture. Figure 1 shows an exemplary system architecture which is supported by the owner of the present application. Reference numeral 100 denotes a host system that is able to send an receive e-mail messages. Reference numeral 102 denotes a mobile terminal, also able to send an receive e-mail messages. The e-mail messages may originate or terminate at external e-mail terminals, one of which is denoted by reference numeral 104.The invention aims at improving cooperation between the host system 100 and mobile terminal 102 such that they can use a single e-mail account as transparently as possible. This means, for example, that the users of the external e-mail terminals 104, when sending or receiving e-mail, do not need to know if the user of the host system 100 actually uses the host system 100 or the mobile terminal 102 to communicate via e-mail. The transparency also means that e-mail manipulation at the mobile terminal 102 has, as far as possible, the same effect as the corresponding e-mail manipulation at the host system 100. For example, e-mail messages read at the mobile terminal 102 should preferably be marked as read at the host system.

Reference numeral 106 denotes a data network, such as an IP (Internet Protocol) network, which may be the common Internet or its closed subnet-works, commonly called intranets or extranets. Reference numeral 108 denotes an e-mail server and its associated database. There may be separate e-mail servers and/or server addresses for incoming and outgoing e-mail. The database stores an e-mail account, addressable by means of an e-mail address, that appears as a mailbox to the owner of the e-mail account. In order to communicate with mobile terminals 102, the data network 106 is connected, via a gateway 112 to an access network 114. The access network comprises a set of base stations 116 to provide wireless coverage over a wireless interface 118 to the mobile terminals 102.

Reference numeral 110 denotes a messaging centre that is largely responsible for providing the above-mentioned transparency between the host system 100 and the mobile terminal 102. The system architecture also comprises a connectivity function 120, whose task is to push e-mail messages to the mobile terminal. In the embodiment shown in Figure 1, the connectivity function 120 is considered a physically integral but logically distinct element of the messaging centre 110.

The mobile terminal 102 may be a pocket or laptop computer with a radio interface, a smart cellular telephone, or the like. Depending on implementation, the host system 100, if present, may have different roles. In some implementations the host system 100 is optional and may be a conventional office computer that merely acts as the mobile terminal user's principal computer and e-mail terminal. In other implementations the host system may act as a platform for a single user's connectivity function, in addition to being an office computer. In yet other implementations the host system 100 may comprise the connectivity function for several users. Thus it is a server instead of a normal office computer.

We assume here that the access network 114 is able to establish and maintain a tunnel 122 between the messaging centre 110 and the mobile terminal 102. For instance, the tunnel may be set up using GPRS Tunnelling Protocol (GTP) or its later derivatives, or any other suitable tunnelling protocol.

Figure 1 shows an embodiment in which the messaging centre 110 is largely responsible for e-mail transport to/from the mobile terminal 102 via the access network 114, while a separate connectivity function 120 is responsible for data security issues. The connectivity function 120 may be physically attached to or co-located with the messaging centre 110, but they are logically separate elements. Indeed, a definite advantage of the separate connectivity function 120 is that it can be detached from the messaging centre, for instance, within the company that owns the host system 100 or the e-mail server 108. For a small number of users, the connectivity function 120 can be installed in each host system 100, or the host system 100 can be interpreted as a separate server configured to support multiple users. It is even possible to implement some or all the above-mentioned options. This means, for example, that there is one or more messaging centres 110 that offer services to several network operators, or they may be a dedicated messaging centre for each network operator (somewhat analogous to short messaging centres). Each messaging centre 110 may have an integral connectivity function 120 to support users who don't wish to install a separate connectivity function in a host system 100. For users who do install a separate connectivity function 120 in their host systems 100, such connectivity functions bypass the connectivity function in the messaging centre 110 and address the messaging centre 110 directly.

A real e-mail system supports a large number of mobile terminals 102 and tunnels 122. In order to keep track of which e-mail account and which tunnel belongs to which mobile terminal, the messaging centre 110 and the connectivity function collectively maintain an association 124, 124' for each supported mobile terminal. Basically, each association 124, 124' joins three fields, namely an e-mail address 124A assigned to the mobile terminal or its user, encryption information 124C and a temporary wireless identity 124D of the mobile terminal in the access network. The embodiment shown in Figure 1 also employs a terminal identifier 124B which may be the same as the e-mail address 124A of the mobile terminal 102, in which case the association 124 actually associates three information items. Alternatively, the terminal identifier 124B may be an identifier arbitrarily assigned to the mobile terminal. In a preferred implementation the terminal identifier 124B is the mobile terminal's equipment identifier or its derivative. The encryption information 124C is preferably related to the mobile terminal's equipment identity and is preferably generated by the mobile terminal itself, so as to ensure that no other terminal besides the one used for creating the encryption information 124C will be able to decrypt incoming encrypted e-mail messages. The temporary wireless identity 124D may be the identifier of the tunnel 122 to the mobile station. Of course, the tunnel identifier is not permanent and is only known when a tunnel exists.

Figure 2 shows a secure e-mail provisioning technique in which the host system 100 authenticates the user of the mobile terminal 102. In step 2-1 the client software in the mobile terminal 102 generates and displays a service activation code. In step 2-2 the host system 100 authenticates the person who enters the service activation code. Instead of a dedicated authentication step, the technique may rely on the authentication of the underlying e-mail system, such as user name and password combination. After all, the e-mail provisioning need not be more secure than the underlying e-mail system. In step 2-3 the service activation code is then conveyed off-line to the host system 100. The idea of the off-line communication is to eliminate any chance of eavesdropping before secure a communication channel can be established. For instance, the service activation code may be entered manually or via a local connection, such as a wired or optical interface or a short-range wireless interface, such as Bluetooth™. Finally, in step 2-4, the mobile terminal's service activation code is registered with the connectivity function 120.

The service activation code is closely related to an encryption key to be used in future communications between the connectivity function 120 and the mobile terminal 102. The service activation code and the encryption key may be identical, or one may be a subset of the other, or the encryption key may be derived from the service activation code by means of some, preferably unpublished, algorithm. The fact that the service activation code and the encryption key are closely related to each other ensures that the terminal used in the authentication process is the terminal used to access the e-mail service after-wards.

Thus the idea of conveying the service activation code to the connectivity function 120 via the host system 100 solves both the security-related and user interface-related problems mentioned above. If there is no host system 100 that can authenticate the mobile terminal and its user. Instead, the user may enter the provisioning data to the connectivity function via some suitable connection. The provisioning data entered by the user may be checked by sending a trial e-mail message and attempting to read it. If the check succeeds, it is regarded as the authentication. Yet another way is to convey the service activation code to a dedicated support person who performs the authentication (eg by recognizing the person's face or voice) and enters the service activation code into the connectivity function 120. The connectivity function 120 now stores an association (item 124 in Figure 1) between the e-mail address 124A and encryption information 124C.

The mobile terminal preferably generates the service activation code based on the encryption key, the mobile terminal's identifier and a checksum. A benefit of the checksum is that invalid service activation codes can be detected, considering the fact that the service activation code may be conveyed via channels that are immune to electrical eavesdropping but very prone to human errors. For example, the service activation code may be read visually from the mobile terminal's display and entered manually into another terminal.

The mobile terminal's identifier can be its IMEI, IMSI, MSISDN, or other network identifier. A benefit of encoding the mobile terminal's identifier and the encryption key into the service activation key is that the connectivity function 120 needs both to communicate with the mobile terminal. The connectivity function 120 needs the mobile terminal's identifier in order to send data to the mobile terminal. The connectivity function 120 also needs the encryption key because it is the mobile terminal's peer entity as regards encryption. As soon as the connectivity function 120 receives knowledge of the mobile terminal's identifier and the encryption key, it can send the mobile terminal a first message comprising service provisioning settings, after which it can begin sending user traffic, such as new e-mail messages, calendar information and the like.

As stated in the description of Figure 1, there are several possible implementations for the connectivity function 120. For example, it can be installed in a public data network, such as the Internet, as a physically integral element of the messaging centre 110 but logically distinct from it. It can also be installed in a company's private network within a firewall. It can be installed as a process in each mobile terminal user's office computer, or one common server can support all mobile users of the company, somewhat analogously to a company's e-mail server. The advantages of the invention are easiest to see when the connectivity function is dedicated to a particular company and is located within the company's firewall. This is because in this implementation there are several connectivity functions, and the mobile terminal has no a priori knowledge of which one it should connect to. A coarse solution to this problem is requesting this information from the user, but entering exact configuration information via a small user interface is one of the problems this invention attempts to solve.

It is readily apparent to a person skilled in the art that, as the technology advances, the inventive concept can be implemented in various ways. The invention and its embodiments are not limited to the examples described above but may vary within the scope of the claims.

## Claims

1. A method for conveying e-mail traffic between an e-mail server (108) and a mobile terminal (102), wherein the mobile terminal has an e-mail address (124A) under the e-mail server and a permanent identifier (124B) and a temporary identity (124D) in an access network (114), the method comprising:
- installing a connectivity function (120) which is operationally coupled to the e-mail server (108) and the access network (114), wherein the connectivity function (120) is configured to encrypt e-mail traffic to the mobile terminal and decrypt e-mail traffic from the mobile terminal, by using encryption information (124C);
- generating (2-1) a service activation code at the mobile terminal, wherein the service activation code is generated by the mobile terminal based on the permanent identifier (124B) of the mobile terminal, the encryption information (124C) and checksum information;
- displaying the service activation code on a display of the mobile terminal (102);
entering the displayed service activation code into an authenticating terminal (100);
- conveying (2-4) the entered service activation code from the authenticating terminal to the connectivity function (120), so as to provide the connectivity function with the permanent identifier (124B) of the mobile terminal and the encryption information (124C);
- establishing an encrypted data channel (122) between the connectivity function (120) and the mobile terminal (102), based on the permanent identifier (124B) of the mobile terminal and the encryption information (124C).

2. A method according to claim 1, wherein the encryption information is based on the permanent identifier (124B) of the mobile terminal.

3. A method according to claim 1, wherein the encrypted data channel (122) is established by the connectivity function (120) sending the mobile terminal (102) a message comprising service provisioning settings using the permanent identifier (124B) of the mobile terminal and the encryption information (124C).

4. A method according to claim 1, wherein the connectivity function is dedicated to a particular company and is located within that particular company's firewall.

5. A method according to claim 1, wherein the encryption information can be derived from the service activation code by means of an algorithm.

6. A computer program set on at least one carrier, the computer program set comprising:
- a first routine for causing a mobile terminal (102) to generate (2-1) a service activation code based on a permanent identifier (124B) of the mobile terminal, encryption information (124C) and checksum information;
- a second routine for displaying the service activation code on a display of the mobile terminal (102) such that the displayed service activation code can be entered into an authenticating terminal (100);
- a third routine for conveying the entered service activation code from the authenticating terminal to a connectivity function (120), so as to provide the connectivity function with the permanent identifier (124B) of the mobile terminal and the encryption information (124C), wherein the connectivity function (120) is operationally coupled to an e-mail server (108) and an access network (114), wherein the connectivity function is configured to encrypt e-mail traffic to the mobile terminal and decrypt e-mail traffic from the mobile terminal, by using the encryption information (124C); and
- a set of fourth routines for establishing an encrypted data channel (122) between the connectivity function (120) and the mobile terminal (102), based on the permanent identifier (124B) of the mobile terminal and the encryption information (124C).

## Patentansprüche

1. Verfahren zum Übertragen von E-Mail-Verkehr zwischen einem E-Mail-Server (108) und einem mobilen Endgerät (102), wobei das mobile Endgerät eine E-Mail-Adresse (124A) unter dem E-Mail-Server und einen permanenten Identifizierer (124B) sowie eine temporäre Identität (124D) in einem Zugriffsnetzwerk (114) aufweist, wobei das Verfahren Folgendes umfasst:
Installieren einer Konnektivitätsfunktion (120), die mit dem E-Mail-Server (108) und dem Zugriffsnetzwerk (114) wirkungsverbunden ist, wobei die Konnektivitätsfunktion (120) konfiguriert ist, unter Verwendung von Verschlüsselungsinformationen (124C) E-Mail-Verkehr zum mobilen Endgerät zu verschlüsseln und E-Mail-Verkehr vom mobilen Endgerät zu entschlüsseln;
Erzeugen (2-1) eines Dienstaktivierungskodes im mobilen Endgerät, wobei der Dienstaktivierungskode durch das mobilen Endgerät basierend auf dem permanenten Identifizierer (124B) des mobilen Endgeräts, den Verschlüsselungsinformationen (124C) und Prüfsummeninformationen basiert;
Anzeigen des Dienstaktivierungskodes auf einer Anzeige des mobilen Endgeräts (102);
Eingeben des angezeigten Dienstaktivierungskodes in ein Authentifizierungsendgerät (100);
Übertragen (2-4) des eingegebenen Dienstaktivierungskodes vom Authentifizierungsendgerät zur Konnektivitätsfunktion (120), um der Konnektivitätsfunktion den permanenten Identifizierer (124B) des mobilen Endgeräts und die Verschlüsselungsinformationen (124C) bereitzustellen;
Einrichten eines verschlüsselten Datenkanals (122) zwischen der Konnektivitätsfunktion (120) und dem mobilen Endgerät (102) basierend auf dem permanenten Identifizierer (124B) des mobilen Endgeräts und den Verschlüsselungsinformationen (124C).

2. Verfahren nach Anspruch 1, wobei die Verschlüsselungsinformationen auf dem permanenten Identifizierer (124B) des mobilen Endgeräts basieren.

3. Verfahren nach Anspruch 1, wobei der verschlüsselte Datenkanal (122) eingerichtet wird, indem die Konnektivitätsfunktion (120) dem mobilen Endgerät (102) unter Verwendung des permanenten Identifizierers (124B) des mobilen Endgeräts und der Verschlüsselungsinformationen (124C) eine Nachricht sendet, die Dienstbereitstellungseinstellungen umfasst.

4. Verfahren nach Anspruch 1, wobei die Konnektivitätsfunktion einem bestimmten Unternehmen zugewiesen und in der Firewall dieses bestimmten Unternehmens angeordnet ist.

5. Verfahren nach Anspruch 1, wobei die Verschlüsselungsinformationen durch einen Algorithmus vom Dienstaktivierungskode abgeleitet werden können.

6. Computerprogramm, das auf zumindest einem Träger eingestellt ist, wobei das eingestellte Computerprogramm Folgendes umfasst:
eine erste Routine, um ein mobiles Endgerät (102) zu veranlassen, einen Dienstaktivierungskode basierend auf einem permanenten Identifizierer (124B), Verschlüsselungsinformationen (124C) und Prüfsummeninformationen des mobilen Endgeräts zu erzeugen (2-1):
eine zweite Routine, um den Dienstaktivierungskode auf einer Anzeige des mobilen Endgeräts (102) anzuzeigen, sodass der angezeigte Dienstaktivierungskode in ein Authentifizierungsendgerät (100) eingegeben werden kann;
eine dritte Routine zum Übertragen des eingegebenen Dienstaktivierungskodes vom Authentifizierungsendgerät zu einer Konnektivitätsfunktion (120), um der Konnektivitätsfunktion den permanenten Identifizierer (124B) des mobilen Endgeräts und die Verschlüsselungsinformationen (124C) bereitzustellen, wobei die Konnektivitätsfunktion (120) mit einem E-Mail-Server (108) und einem Zugriffsnetzwerk (114) wirkungsverbunden ist, wobei die Konnektivitätsfunktion konfiguriert ist, unter Verwendung der Verschlüsselungsinformationen (124C) E-Mail-Verkehr zum mobilen Endgerät zu verschlüsseln und E-Mail-Verkehr vom mobilen Endgerät zu entschlüsseln; und
eine Gruppe vierter Routinen zum Einrichten eines verschlüsselten Datenkanals (122) zwischen der Konnektivitätsfunktion (120) und dem mobilen Endgerät (102) basierend auf dem permanenten Identifizierer (124B) des mobilen Endgeräts und den Verschlüsselungsinformationen (124C).

## Revendications

1. Procédé de convoyage d'un trafic de e-mails entre un serveur de e-mails (108) et un terminal mobile (102), où le terminal mobile a une adresse e-mail (124A) sous le serveur de e-mails et un identifiant permanent (124B) et une identité temporaire (124D) dans un réseau d'accès (114), le procédé comprenant :
- installer une fonction de connectivité (120) qui est fonctionnellement couplée au serveur de e-mails (108) et au réseau d'accès (114), où la fonction de connectivité (120) est configurée pour crypter le trafic e-mail au terminal mobile et pour décrypter le trafic e-mail du terminal mobile, en utilisant une information de cryptage (124C) ;
- produire (2-1) un code d'activation de service au terminal mobile, où le code d'activation de service est produit par le terminal mobile sur la base de l'identifiant permanent (124B) du terminal mobile, de l'information de cryptage (124C) et de l'information de la somme de contrôle ;
- afficher le code d'activation de service sur un écran d'affichage du terminal mobile (102) ;
- entrer le code d'activation de service affiché dans un terminal d'authentification (100) ;
- convoyer (2-4) le code d'activation de service entré du terminal d'authentification à la fonction de connectivité (120) de manière à réaliser la fonction de connectivité avec l'identifiant permanent (124B) du terminal mobile et l'information de cryptage (124C) ;
- établir un canal de données cryptées (122) entre la fonction de connectivité (120) et le terminal mobile (102) sur la base de l'identifiant permanent (124B) du terminal mobile et de l'information de cryptage (124C).

2. Procédé selon la revendication 1, dans lequel l'information de cryptage est basée sur l'identifiant permanent (124B) du terminal mobile.

3. Procédé selon la revendication 1, dans lequel le canal de données cryptées (122) est établi par la fonction de connectivité (120) envoyant au terminal mobile (102) un message comprenant des réglages de fourniture de services en utilisant l'identifiant permanent (124B) du terminal mobile et l'information de cryptage (124C).

4. Procédé selon la revendication 1, dans lequel la fonction de connectivité est dédiée à une société particulière et se situe dans le pare-feu de cette société particulière.

5. Procédé selon la revendication 1, dans lequel l'information de cryptage peut être dérivée du code d'activation de service au moyen d'un algorithme.

6. Ensemble de programme informatique sur au moins un support, l'ensemble de programme informatique comprenant :
- un premier sous-programme pour amener un terminal mobile (102) à produire (2-1) un code d'activation de service basé sur un identifiant permanent (124B) du terminal mobile, l'information de cryptage (124C) et l'information de la somme de contrôle ;
- un deuxième sous-programme affichant le code d'activation de service sur un écran d'affichage du terminal mobile (102) de telle sorte que le code d'activation de service affiché peut être entré dans un terminal d'authentification (100) ;
- un troisième sous-programme pour convoyer le code d'activation de service entré du terminal d'authentification à une fonction de connectivité (120) de manière à réaliser la fonction de connectivité avec l'identifiant permanent (124B) du terminal mobile et l'information de cryptage (124C), où la fonction de connectivité (120) est fonctionnellement couplée à un serveur de e-mails (108) et un réseau d'accès (114), où la fonction de connectivité est configurée pour crypter le trafic e-mail au terminal mobile et pour décrypter le trafic e-mail du terminal mobile en utilisant l'information de cryptage (124C) ; et
- un ensemble de quatrièmes sous-programmes pour établir un canal de données cryptées (122) entre la fonction de connectivité (120) et le terminal mobile (102) sur la base de l'identifiant permanent (124B) du terminal mobile et de l'information de cryptage (124C).
